# EUROPÄISCHE PATENTANMELDUNG

(11) **EP 1 336 818 A2**
(43) Veröffentlichungstag der Anmeldung: **20.08.2003**
(21) Anmeldenummer: 03008153.3
(22) Anmeldetag: 12.04.2001
(51) Int. Cl.: G01B 21/04, B23Q 17/22, B25J 9/16

(54) **Verfahren zum Vermessen einer Fertigungsmaschine**

(62) Teilanmeldung aus: 01109313.5
(71) Anmelder: Dreier Technology AG, 7000 Chur (CH)
(72) Erfinder: Dreier, Horst, 72160 Horb-Bittelbronn (DE)
(74) Vertreter: Dreiss, Fuhlendorf, Steimle & Becker

(57) **Zusammenfassung**

Es werden Verfahren, eine Lehre und eine Abtasteinrichtung zum Vermessen von Fertigungsmaschinen mit Gelenkstabkinematik vorgeschlagen mit deren Hilfe das Vermessen vereinfacht, verbessert und vereinheitlicht wird.

## Beschreibung

Die Erfindung betrifft ein Verfahren zum Vermessen einer Fertigungsmaschine.

Fertigungsmaschinen müssen nach der Montage und nach dem Aufstellen beim Kunden vermessen werden, um zu gewährleisten, dass sie die geforderte Genauigkeit in allen Punkten des Bearbeitungsraums erfüllen. Dies trifft in besonderem Maße auf Fertigungsmaschinen mit Gelenkstabkinematik, wie beispielsweise Tripoden oder Hexapoden, zu, da die Werkzeugspindel nicht entlang von fest vorgegebenen Werkzeugachsen geführt wird, sondern jede Vorschubbewegung der Werkzeugspindel durch eine Überlagerung der Bewegung sämtlicher Linearachsen erzeugt wird.

Der Erfindung liegt die Aufgabe zugrunde, das Vermessen von Fertigungsmaschinen, insbesondere von Fertigungsmaschinen mit Gelenkstabkinematik, zu vereinfachen, zu verbessern und zu vereinheitlichen.

Diese Aufgabe wird erfindungsgemäß auch gelöst durch ein Verfahren zum Vermessen einer Fertigungsmaschine mit Gelenkstabkinematik, bei welchem alle Lineareinheiten gleichzeitig vermessen werden indem
- eine Lehre auf den Maschinentisch der Fertigungsmaschine aufgespannt wird,
- ein Referenzmesskörper und mindestens ein weiterer Messkörper der Lehre angefahren wird,
- das Koordinatensystem der Fertigungsmaschine parallel zu den Achsen der Lehre ausgerichtet wird,
- sämtliche Messkörper abgetastet werden,
- die von den Neigungssensoren gemessenen Neigungen und die von den Messtastern gemessenen Werte abgespeichert werden,
- die Messwerte mit den tatsächlichen Abmessungen der Lehre verglichen werden und
- die Messwerte und/oder die Abweichungen von den tatsächlichen Abmessungen der Lehre dargestellt werden, so dass auf einfache und automatisierbare Weise das Vermessen der Lehre erfolgen kann und die Ergebnisse dargestellt werden können und weiterverarbeitet werden können.

Beispielsweise können aus den Abweichungen der gemessenen Werte von den tatsächlichen Abmessungen der Lehre Korrekturen der Steuerung der Fertigungsmaschine abgeleitet werden. Durch das simultane Vermessen aller Lineareinheiten können gegenseitige beeinflussungen der Lineareinheiten untereinander eliminiert werden.

Bei einer weiteren Ausgestaltung des erfindungsgemäßen Verfahrens wird die Lehre nach dem Vermessen jeweils um 45° und um 90° gedreht und wird nach jeder Drehung das Vermessen der Lehre wiederholt, so dass die Zahl der Messpunkte ohne zusätzlichen Aufwand und ohne zusätzliche Ungenauigkeiten erhöht wird.

In weiterer Ergänzung des erfindungsgemäßen Verfahrens ist vorgesehen, dass die Drehachse der Werkzeugspindel um 90° geschwenkt wird und dass das Vermessen der Lehre mindestens teilweise wiederholt wird, so dass ein Drehen der Werkzeugspindel um ihre Drehachse festgestellt werden kann.

Eine weitere Ausgestaltung der Erfindung sieht vor, dass die Darstellung der Messwerte und/oder der Abweichungen von den tatsächichen Abmessungen der Lehre durch Zahlenwerte oder eine dreidimensionale Graphik erfolgt, so dass die Messwerte zur Korrektur der Steuerung der Fertigungsmaschine eingesetzt werden können und im Fall der Darstellung durch eine dreidimensionale Graphik die Bereiche hoher Genauigkeit und weniger hoher Genauigkeit der Fertigungsmaschine schnell lokalisiert werden können.

Weitere Vorteile und vorteilhafte Ausgestaltungen der Erfindung sind der nachfolgenden Beschreibung, der Zeichnung und den Patentansprüchen entnehmbar.

Ausführungsbeispiele des Gegenstands der Erfindung sind in der Zeichnung dargestellt und im Folgenden näher beschrieben. Es zeigen:
- Fig. 1:: eine Fertigungsmaschine mit Gelenkstabkinematik
- Fig. 2:: die Fertigungsmaschine in einer anderen Arbeitsposition;
- Fig. 3:: eine erfindungsgemäße Abtasteinrichtung in einer Werkzeugspindel;
- Fig. 4:: eine detaillierte Darstellung der Messtaster einer Abtasteinrichtung;
- Fig. 5:: eine Draufsicht auf eine erfindungsgemäße Lehre;
- Fig. 6:: einen Schnitt durch die Lehre entlang der Linie A-A und;
- Fig. 7:: einen Schnitt durch die Lehre entlang der Linie B-B;

Im Folgenden werden für gleiche Bauteile in den Figuren gleiche Bezugszeichen verwandt. Es gilt das anhand einer Figur Erläuterte für die anderen Figuren entsprechend.

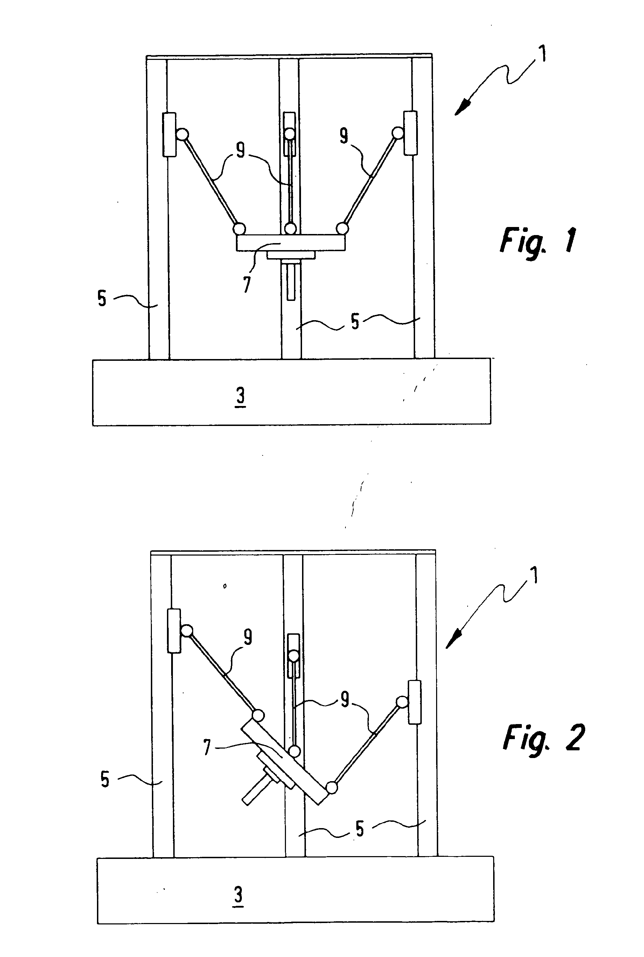

In Fig. 1 ist eine Fertigungsmaschine 1 mit Gelenkstabkinematik schematisch dargestellt. Die Fertigungsmaschine 1 besteht aus einem Maschinentisch 3, mehreren Lineareinheiten 5 und einer Werkzeugspindel 7. Die Werkzeugspindel 7 ist über Gelenkstäbe 9 mit den Lineareinheiten 5 gekoppelt. Durch geeignetes Verfahren der Lineareinheiten 5 kann die Werkzeugspindel 7 innerhalb des oberhalb des Maschinentisches 3 befindlichen Bearbeitungsraums der Fertigungsmaschine 1 nahezu jede beliebige Position und Richtung einnehmen. Dadurch können auch sehr komplexe Geometrien hergestellt werden.

Die Genauigkeit der Werkstücke hängt ganz entscheidend vom Zusammenspiel der Lineareinheiten 5, der dazu benötigten numerischen Steuerung und der Kinematik der Fertigungsmaschine 1 ab.

In Fig. 2 ist eine andere Position und Richtung der Werkzeugspindel 7 dargestellt. Durch den Vergleich der Fig. 1 und 2 wird deutlich, dass Positions- und/oder Richtungsänderungen der Werkzeugspindel 7 ein Zusammenwirken aller Lineareinheiten 5 erfordern.

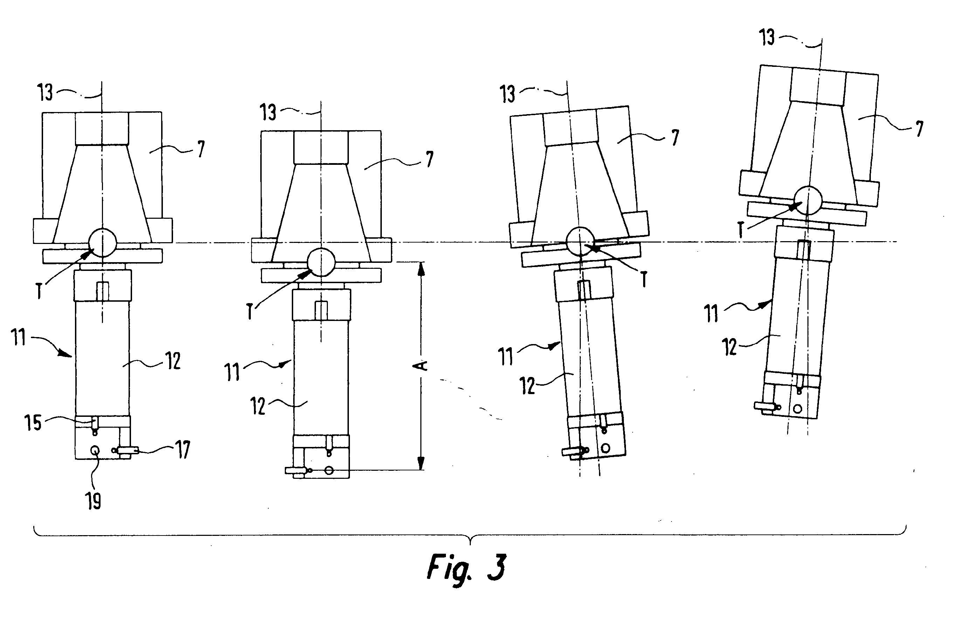

In Fig. 3 ist eine Werkzeugspindel 7 mit einer daran befestigten Abtasteinrichtung 11 in vier verschiedenen Positionen dargestellt. Die Werkzeugspindel 7 wird im Wesentlichen durch ihren Werkzeugträgerbezugspunkt T, und die Richtung ihrer Drehachse 13 festgelegt.

Die Abtasteinrichtung 11 weist an dem unteren Ende ihres Mesdorns 12 drei senkrecht zueinander angeordnete Messtaster 15, 17 und 19 auf. Der Messdorn 12 ersetzt einen üblichen runden Messdorn, da davon ausgegangen werden muss, dass sich die Werkzeugspindel 7 aufgrund der Toleranzen der Fertigungsmaschine 1 an jedem Punkt innerhalb des Bearbeitungsraums sich anders neigt.

Wenn die Abtasteinrichtung mit seinen Messtastern 15, 17 und 19 an einen in Fig. 3 nicht dargestellten Messkörper angefahren wird, kann aus den Messwerten der Messtaster 15, 17 und 19 bei bekanntem Abstand A zwischen Werkzeugträgerreferenzpunkt T und den Messtastern 15, 17 und 19 die Lage des Werkzeugträgerreferenzpunkts T berechnet werden. Allerdings ist zur genauen Berechnung des Werkzeugträgerreferenzpunkts T noch die Kennntis der Richtung der Drehachse 13 der Werkzeugspindel 7 erforderlich. Zu diesem Zweck sind in der Messdorn 12 zwei in Fig. 3 nicht dargestellte hochpräzise Neigungsmesser angeordnet. Jeder Neigungsmesser misst jeder in einer Ebene, die parallel zur Drehachse 13 und senkrecht zu der Messebene des jeweils anderen Neigungsmessers verläuft.

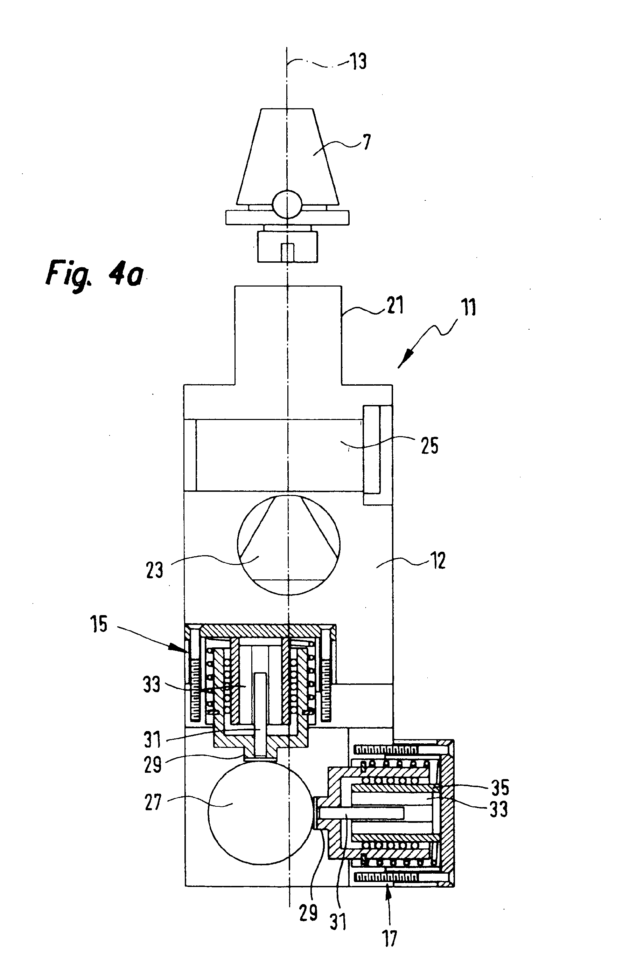

In Fig. 4a ist eine erste Ausführungsform einer erfindungsgemäßen Abtasteinrichtung 11 etwas detaillierter dargestellt. Die Abtasteinrichtung 11 wird über eine zylindrische Aufnahme 21 in der nicht maßstäblich und nur schematisch dargestellten Werkzeugspindel 7 aufgenommen. Im oberen Bereich des Messdorns 12 sind die zwei senkrecht zueinander angeordneten Neigungsmesser 23 und 25 schematisch dargestellt. Aus den Messwerten der Neigungsmesser 23 und 25 kann die Richtung der Drehachse 13 der Werkzeugspindel 7 exakt bestimmt werden.

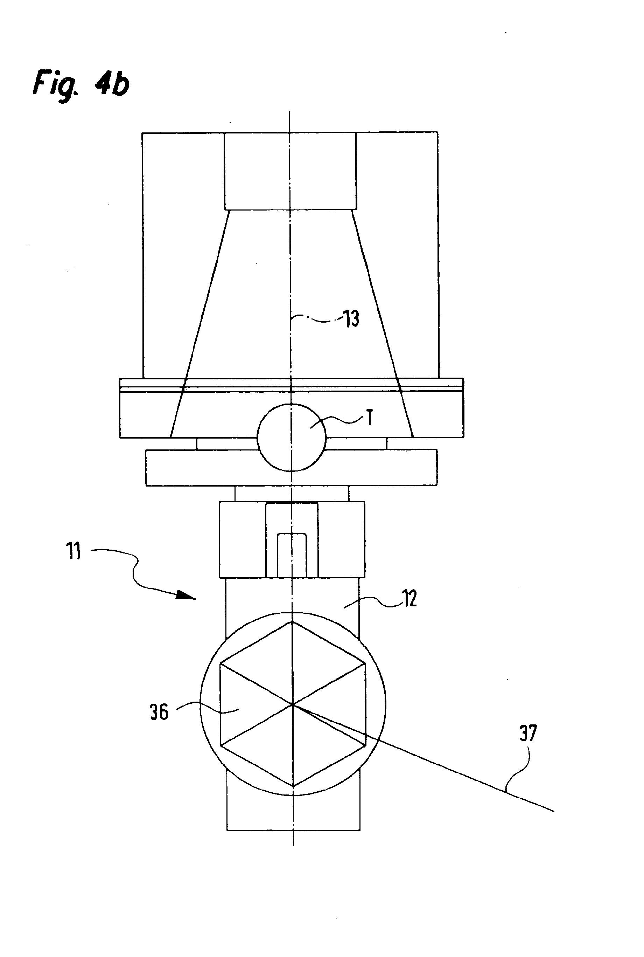

Im unteren Bereich des Messdorns 12 befindet sich ein kugelförmiger Messkörper 27, dessen Ortskoordinaten von den Messtastern 15, 17 und 19 gemessen werden. Der Messtaster 19 ist in Fig. 4 nicht dargestellt. Die Messtaster 15, 17 und 19 weisen einen Messbolzen 29 auf. In der Längsachse des Messbolzens 29 ist ein Ferritstab 31 angeordnet und fest mit dem Messbolzen 29 verbunden. Der Ferritstab 31 taucht in eine Spule 33 ein. Je nach Eintauchtiefe des Ferritstabs 31 in die Spule 33 ändert sich deren Induktivität. Über die Induktivität der Spule 33 kann somit die Position des Messbolzens 29 bestimmt werden. Konzentrisch zur Längsachse des Messbolzens 29 ist eine starr mit dem Messdorn 12 verbundene Führungshülse 35 angeordnet, auf welcher der Messbolzen 29 über eine Kugelführung geführt wird. Da die Lagerung des Messbolzens 29 konzentrisch zu der Spule 33 und dem Ferritstab 31 angeordnet ist, ergibt sich eine sehr kurze Baulänge der erfindungsgemäßen Messtaster 15, 17 und 19, was den Einsatz der erfindungsgemäßen Abtasteinrichtung 11 auch unter beengten räumlichen Verhältnissen ermöglicht.

In Fig. 4b ist eine zweite Ausführungsform einer erfindungsgemäßen Abtasteinrichtung 11 dargestellt. Anstelle der Messtaster 15, 17, und 19 wird ein dreidimensional messendes Läsermessgerät verwendet. Im oberen Bereich des Messdorns 12 sind eine oder mehrere Tripel-Reflektoren 36 angeordnet, welche einen von einer ortsfesten, in Fig. 4b nicht dargestellten, Laserquelle ausgesandten Laserstrahl 37 reflektieren. Die Laserquelle führt den Laserstrahl 37 dem Tripel-Reflektor 36 nach, so dass aus der Richtung des Laserstrahls 37 und dem Abstand zwischen Laserquelle und Spiegel 36 der Ort des Tripel-Reflektors 36 berechnet werden kann. Zusammen mit der von den in Fig. 4b nicht dargestellten Neigungssensoren der Abtasteinrichtung 11 ermittelten Richtung der Drehachse 13 der Werkzeugspindel 7 kann der Ort des Werkzeugträgerbezugspunkts T bestimmt werden.

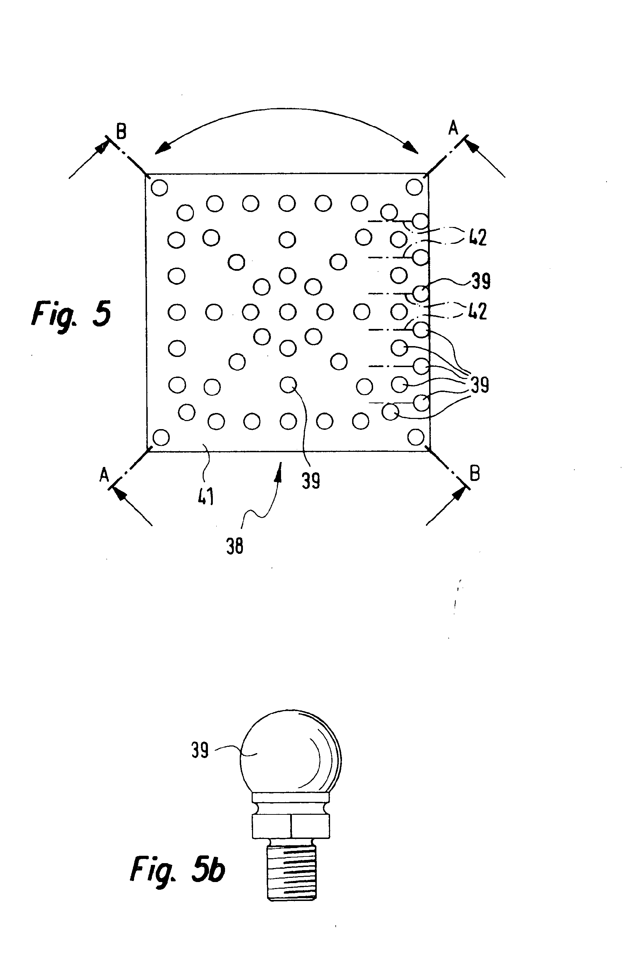

In Fig. 5 ist eine Draufsicht auf eine erfindungsgemäße Lehre 38 zum Vermessen einer Fertigungsmaschine 1 dargestellt. Die Lehre 38 hat einen quadratischen Grundriss und weist parallel zu ihren Kanten und in Richtung der Diagonalen mehrere Reihen von Messkörpern 39 auf. Aus Gründen der Übersichtlichkeit sind nur wenige der Messkörper mittels einer geschweiften Linie mit dem Bezugszeichen 39 verbunden. Die Messkörper 39 können kugelförmig gestaltet sein und einen Gewindezapfen aufweisen, mit dem sie in einen Grundkörper 41 der Lehre 38 eingedreht werden. An der in Fig. 5 rechten Außenseite der Lehre 38 ragen die Messkörper 39 nach rechts und sind in einer Bohrung im Grundkörper 41 verschraubt, deren Längsachse sich in der Zeichnungsebene von links nach rechts erstreckt. Die Längsachsen 42 dieser Bohrungen sind durch strichpunktierte Linien in Fig. 5 dargestellt. Durch diese gegenüber den anderen Messkörpern 39 um 90° verdrehten Anordnung der Messkörper kann die Werkzeugspindel 7, welche in Fig. 5 nicht dargestellt ist, zu Prüfzwecken auch um 90° geschwenkt werden und die Genauigkeit dieser Schwenkbewegung mit Hilfe der auf der rechten Seite der Lehre 38 angeordneten Messkörper 39 geprüft werden.

In der Fig. 5b ist ein kugelförmiger Messkörper 39 mit Gewindezapfen dargestellt. Wenn der Grundkörper 41 der Lehre 38 aus Granit hergestellt wird, werden in Fig. 5 nicht dargestellte Gewindehülsen in den Grundkörper eingeklebt und der Gewindezapfen der Messkörper 39 in die Gewindehülsen eingeschraubt.

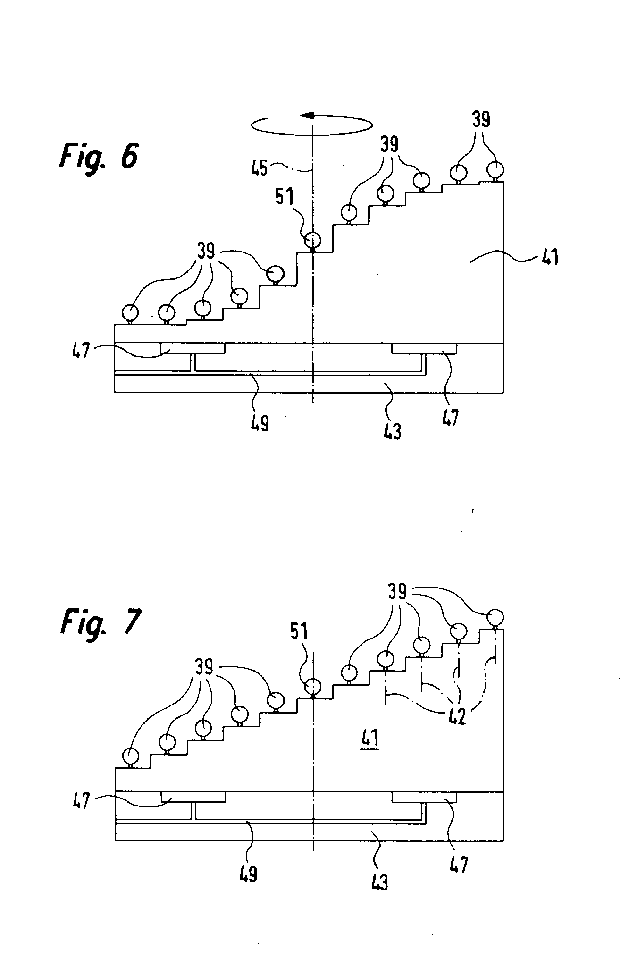

In Fig. 6 ist ein Schnitt entlang der Linie A-A durch die Lehre 38 dargestellt. Aus dieser Ansicht ergibt sich, dass die Messkörper 39 entlang einer teilweise konkav und teilweise konvex gekrümmten Linie angeordnet sind, so dass die Präzision der Vorschubbewegung der Werkzeugspindel 7 entlang gekrümmter Linien geprüft werden kann.

Aus Fig. 6 ist ersichtlich, dass der Grundkörper 41 auf einer Grundplatte 43 um eine Drehachse 45 drehbar gelagert ist. Die Lagerung erfolgt durch Luftlager 47, die über eine Versorgungsleitung 49 bei Bedarf mit Druckluft versorgt wird. Wenn der Grundkörper 41 nicht verdreht werden soll, wird die Druckluftzufuhr abgeschaltet, und der Grundkörper 41 sinkt auf die Grundplatte 43. Nicht dargestellt ist eine Zentrierung des Grundkörpers 41 auf der Grundplatte 43.

In Fig. 7 ist ein Schnitt durch die erfindungsgemäße Lehre 38 entlang der Linie B-B dargestellt. Aus dieser Darstellung wird deutlich, dass die Messkörper 39 entlang einer geraden Linie angeordnet sind. Somit kann auch die Anfahrgenauigkeit der Fertigungsmaschine an Messkörpern 39 an schräg zu den Hauptachsen der Lehre 38 liegende Linien geprüft werden. Der Messkörper 51 zeichnet sich dadurch aus, dass die Drehachse 45 durch seinen Mittelpunkt verläuft. Dieser Messkörper 51 ist der Referenz-Messkörper der Lehre 38.

Alle in der Zeichnung, der Beschreibung und den Patentansprüchen beschriebenen Merkmale können sowohl einzeln als auch in beliebiger Kombination miteinander erfindungswesentlich sein.

## Patentansprüche

1. Verfahren zum Vermessen einer Fertigungsmaschine (1) mit Gelenkstabkinematik bei dem alle Lineareinheiten (5) gleichzeitig vermessen werden, **gekennzeichnet durch** folgende Verfahrensschritte:
- Aufspannen einer Lehre (38) auf den Maschinentisch (3) der Fertigungsmaschine (1),
- Anfahren eines Referenz-Messkörpers (51) und mindestens eines weiteren Messkörpers (39),
- Ausrichten des Koordinatensystems der Fertigungsmaschine (1) parallel zu den Achsen der Lehre (38),
- Abtasten sämtlicher Messkörper (39, 51),
- Speichern der von den Neigungssensoren (23, 25) gemessenen Neigungen und der von den Messtastern (15, 17, 19) gemessenen Werte,
- Vergleich der Messwerte mit den tatsächlichen Abmessungen der Lehre (38) und
- Darstellung der Messwerte und/oder der Abweichungen von den tatsächlichen Abmessungen der Lehre (38).

2. Verfahren nach Anspruch 1, **dadurch gekennzeichnet, dass** die die Lehre (38) nach dem Vermessen jeweils um 45° und um 90° gedreht wird und nach jeder Drehung das Vermessen der Lehre (38) wiederholt wird.

3. Verfahren nach Anspruch 1 oder 2, **dadurch gekennzeichnet, dass** die Drehachse (13) der Werkzeugspindel (7) um 90° geschwenkt wird, und dass das Vermessen der Lehre (38) mindestens teilweise wiederholt wird.

4. Verfahren nach einem der Ansprüche 1 bis' 3, **dadurch gekennzeichnet, dass** die Darstellung der Messwerte und/oder der Abweichungen von den tatsächlichen Abmessungen der Lehre (38) durch Zahlenwerte oder durch eine dreidimensionale Graphik erfolgt.
